# EUROPÄISCHE PATENTANMELDUNG

(11) **EP 1 345 457 A1**
(43) Veröffentlichungstag der Anmeldung: **17.09.2003**
(21) Anmeldenummer: 02005609.9
(22) Anmeldetag: 12.03.2002
(51) Int. Cl.: H04Q 3/62, H04M 7/00

(54) **Vernetzung von Telefonanlagen**

(71) Anmelder: Tenovis GmbH & Co. KG, 60326 Frankfurt am Main (DE)
(72) Erfinder: Horsinka, Wolfgang, 68307 Mannheim (DE); Kobitzsch, Werner, 70327 Stuttgart (DE); Weise, Henning, 50931 Köln (DE); Januschke, Thomas, 70771 Leinfelden-Echterdingen (DE)

(57) **Zusammenfassung**

In einem Kommunikationssystem (10) mit unabhängigen über ein Festnetz (30) verbundenen ISDN-Telefonanlagen (12, 44, 46) mit Leistungsmerkmalen weist eine erste ISDN-Telefonanlage (12) eine CTI Application mit einer ersten Teilnehmerliste auf, die der ersten Teilnehmerliste ausgewählte Teilnehmer einer zweiten ISDN-Telefonanlage (44) als virtuelle Teilnehmer hinzufügt derart, dass die ausgewählten Teilnehmer in Bezug auf die Leistungsmerkmale als Teilnehmer des ersten ISDN-Telefonanlage behandelt werden. Ein Verfahren zum Vernetzen der verbundenen ISDN-Telefonanlagen (12, 44, 46) mit teilnehmerbezogenen Leistungsmerkmalen erfasst ausgewählte Teilnehmer einer ausgewählten zweiten ISDN-Telefonanlage (44) in der CTI Application als virtuelle Teilnehmer der ersten ISDN-Telefonanlage (12) derart, dass die ausgewählten Teilnehmer in Bezug auf ihre Leistungsmerkmale als Teilnehmer des ersten ISDN-Telefonanlage behandelt werden. So können Telefonanlagen ohne QSIG vernetzt werden.

## Beschreibung

Die Erfindung betrifft ein Verfahren zum Vernetzen von Telefonanlagen und ein Verfahren zum Aufbau einer Kommunikationsverbindung sowie ein Kommunikationssystem, wobei die unabhängigen Telefonanlagen über ein Festnetz verbunden sind und teilnehmerbezogene Leistungsmerkmale aufweisen.

Telefonanlagen unterschiedlicher Größe sind üblicherweise unabhängig voneinander an ein Festnetz angebunden. Telefonanlagen weisen teilnehmerbezogene Leistungsmerkmale auf, die den jeweiligen Teilnehmern einer Telefonanlage zugeordnet sind und zur Verfügung stehen. Die Leistungsmerkmale werden realisiert durch eine entsprechende Signalisierung zwischen den Teilnehmern, die unabhängig von Kommunikationsnutzdaten, etwa Gesprächsdaten, übertragen werden.

Die Vernetzung von Telekommunikationsanlagen zu einem vernetzten Telekommunikationssystem bedeutet, dass Leistungsmerkmale festnetzübergreifend zur Verfügung stehen, also Teilnehmer einer Telefonanlage im Telekommunikationssystem Leistungsmerkmale zur Verfügung haben, die Teilnehmer einer physikalisch anderen Telefonanlage des Telekommunikationssystems, die unabhängig an ein Festnetz angebunden ist, betreffen. Ein Grundproblem der Vernetzung von Telefonanlagen ist, dass im Festnetz nur eine sehr beschränkte Signalisierung definiert und möglich ist.

Große Systeme lassen sich vernetzen mit Hilfe des Vernetzungsprotokolls QSIG (Q-interface signalling protocol), welches über das Festnetz signalisiert wird und in derartigen Anlagen normalerweise mit einem großen Aufwand implementiert ist. Kleine und mittlere Telekommunikationssysteme haben bisher QSIG nur teilweise und mit signifikantem Aufwand implementiert.

In vielen Installationen ist die Telefonanlage mit einem Computer verbunden, wobei eine CTI (Computer Telephony Integration) Applikation kann auf elegante Art und Weise eine gewünschte Kommunikation (Telefonieapplikationen) unterstützt durch eine geeignete Darstellung der Kommunikationsvarianten auf einem Bildschirm. Dies ist auch für die Teilnehmer eines kleinen und mittleren Telekommunikationssystems verfügbar.

Bei Installationen mit mehreren Arbeitsplätzen mit jeweils sowohl einem Telefonterminal als auch einem Computer sind die Computer üblicherweise über ein LAN miteinander verbunden. Bezüglich CTI Applikationen bilden die Computer eine Client-Server Konfiguration, wobei ein CTI-Server eine CSTA-Verbindung (Computer Supported Telephony Application) zur Telekommunikationsanlage ermöglicht. Die Clients kommunizieren über den CTI-Server mit der Telefonanlage.

Praktisch bestehen häufig parallele Hardwarestrukturen aus einem Telefonnetzwerk mit zentraler Telefonanlage und Terminals auf der einen Seite und einem Computernetzwerk mit CTI-Server und Clients auf der anderen Seite, wobei paarweise bestimmten Terminals bestimmte Clients zugeordnet sind und wobei die parallelen Hardwarestrukturen über eine CSTA-Verbindung zwischen Telefonanlage und CTI-Server miteinander verbunden sind.

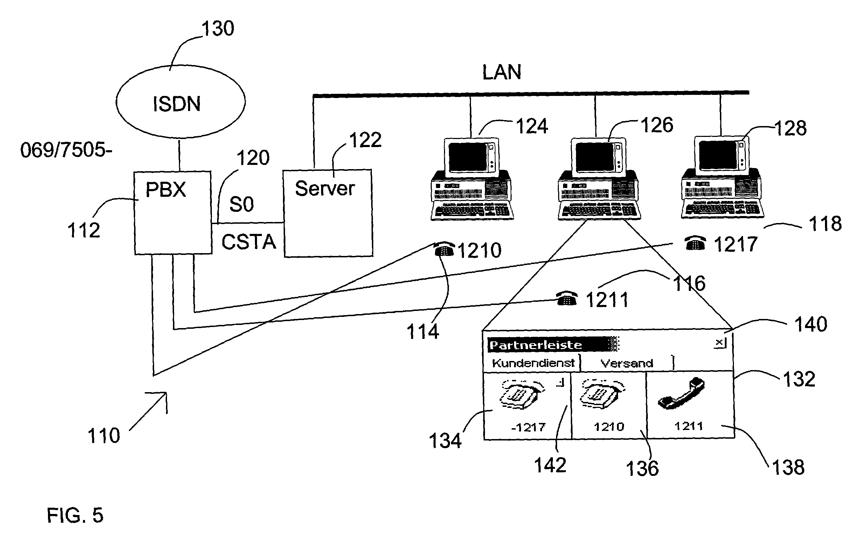

FIG. 5 zeigt ein kleines oder mittleres Telekommunikationssystem 110 nach dem Stand der Technik. Das Telekommunikationssystem 110 umfasst ein Telefonnetzwerk mit zentraler Telefonanlage PBX (Private Branch Exchange) 112 und damit verbundene Terminals 114, 116, 118 einerseits, welches über eine CSTA-Verbindung 120 mit einem Computernetzwerk mit CTI-Server 122 und über LAN angebundenen Clients 124, 126, 128 andererseits verbunden ist. Dabei sind paarweise (114, 124; 116, 126; 118, 128) bestimmte Terminals und Clients einander zugeordnet. Die Telefonanlage 112 ist mit einem öffentlichen ISDN Festnetz 130 verbunden. der Telefonanlage 112 ist die Festnetz-Anschlussnummer 7505 im Ortsnetz 69 zugeordnet und den Terminals sind Nebenstellen-Anschlussnummern 11210, 11211 und 11217 zugeordnet.

Von den Leistungsmerkmalen der Telefonanlage wird hier Gebrauch gemacht, in dem die Telefoniezustände der Teilnehmer derselben Gruppe bzw. deren Terminals einem oder mehreren Teilnehmern mitgeteilt werden, und zwar besonders komfortabel über CTI auf den jeweils zugeordneten Computerbildschirm. Exemplarisch ausgewählt ist für den dem Terminal 116 zugeordneten Client 126 ein Bildschirmfenster "Partnerleiste" 132 dargestellt, in dem die Telefoniezustände der Teilnehmer derselben Gruppe bzw. deren Terminals in Feldern 134, 136, 138 dargestellt sind. Hier gehören zur Gruppe die Terminals 124, 126, und 128, die in der Reihenfolge 128, 124, 126 dargestellt sind, wobei Terminals 128 und 124 im verbindungslosen Zustand sind, dargestellt durch Felder 134, 136, und der Hörer des Terminals 126 abgenommen ist, dargestellt durch Feld 138. Weiterhin sind häufig nachgefragte Weiterverbindungen über eine Vermittlungsleiste 140 komfortabel erreichbar. Ein bei Terminal 118 eingehender Anruf wird im zugeordneten Feld 134 durch das Symbol 142 angezeigt. Ein Bearbeiter am Arbeitsplatz mit Terminal 116 und Client 126 kann nun bequem über den Client 126 die Telefonanlage steuern, beispielsweise den bei Terminal 118 ankommenden Anruf annehmen.

Eine Vernetzung von mehreren kleinen oder mittleren Telefonanlagen über ein Festnetz ist nach dem Stand der Technik nur mit dem großen Aufwand einer teilweisen QSIG Implementierung möglich.

Der Erfindung liegt daher die Aufgabe zugrunde, unabhängige über ein Festnetz verbundene ISDN-Telefonanlagen mit teilnehmerbezogenen Leistungsmerkmalen mit geringem Aufwand zu vernetzen.

Diese Aufgabe wird durch die Verfahren und eine Vorrichtung mit den Merkmalen der unabhängigen Patentansprüche gelöst. Bevorzugte Ausgestaltungen der Erfindung ergeben sich aus den abhängigen Ansprüchen.

Ein Tool bzw. Administrationswerkzeug hat Informationen über Endgeräte und Teilnehmer und weist ein bestimmtes Endgerät einem bestimmten Teilnehmer über eine Rufnummer eindeutig zu.

Ein erfindungsgemäßes Verfahren zum Vernetzen von unabhängigen über ein Festnetz verbundenen ISDN-Telefonanlagen mit teilnehmerbezogenen Leistungsmerkmalen beginnt mit dem Bestimmen einer ersten ISDN-Telefonanlage mit einer CTI Application, in welche Teilnehmer einer anderen Telefonanlage als virtuelle Teilnehmer in Bezug auf ihre Leistungsmerkmale aufgenommen werden sollen. Es folgt das Auswählen von Teilnehmern einer ausgewählten zweiten ISDN-Telefonanlage. Damit liegen die hinzuzunehmenden Teilnehmer und deren zugehörige Telefonanlage fest. Nun folgt das Erfassen der ausgewählten Teilnehmer in der CTI Application als virtuelle Teilnehmer der ersten ISDN-Telefonanlage derart, dass die ausgewählten Teilnehmer in Bezug auf ihre Leistungsmerkmale als Teilnehmer des ersten ISDN-Telefonanlage behandelt werden. Auf diese Weise können in der ersten ISDN-Telefonanlage zur Verfügung stehende Leistungsmerkmale auf Teilnehmer außerhalb dieser Telefonanlage angewendet werden.

Nach einer vorteilhaften Ausgestaltung der Erfindung umfasst das Erfassen eine Signalisierung über das Festnetz. Dies kann geschehen, indem die Signalisierungsdaten als Nutzdaten übertragen werden. Eine solche Übertragung über eine datensicherheitsmäßig geschützte Leitung bietet Vorteile bei der Datensicherheit.

Nach einer anderen vorteilhaften Ausgestaltung der Erfindung umfasst das Erfassen eine Signalisierung über das Internet bzw., falls vorhanden über ein Intranet. So können die Signalisierungsdaten besonders einfach übertragen werden.

Vorzugsweise erfolgt das Erfassen mit einer Erfassungs-Signalisierung, welche eine gemeinsame Eigenschaft der ersten und der zweiten ISDN-Telefonanlage ist, und vorteilhaft mit einem Administrationswerkzeug. Es können auch alle Teilnehmer der zweiten lokalen ISDN-Telefonanlage ausgewählt werden.

Nach einer weiteren vorteilhaften Ausgestaltung der Erfindung weisen die erste und die zweite ISDN-Telefonanlage gemeinsame Leistungsmerkmale auf.

Vorzugsweise werden in der ersten ISDN-Telefonanlage Teilnehmer, möglicherweise alle Teilnehmer, bestimmt, die mit den virtuellen Teilnehmern der ersten ISDN-Telefonanlage simultan in einer Bildschirmmaske der CTI Application angezeigt werden.

Vorteilhaft wird ein Vermittlungsplatz eingerichtet für eine Gruppe von Teilnehmern aus den erfassten Teilnehmern. So können beispielsweise separate Werbeaktionen verschiedener Filialen eines Unternehmens mit jeweils eigener Rufnummer zentral in einer wählbaren Filiale zusammengeführt und zugehörige Anrufe bearbeitet werden.

Die CTI Application ist bevorzugt in einer Client-Server Konfiguration realisiert. Dann wird vorteilhaft ein bestimmten Client als Vermittlungsplatz für eine Gruppe von Teilnehmern aus den erfassten Teilnehmern eingerichtet.

Ein wesentlicher Punkt der Erfindung liegt darin, die gemeinsamen Existenz eines Telekommunikations-Netzes repräsentiert durch PSTNs (Public Switched Telephone Network) und dem Internet bzw. Intranet zu nutzen, indem eine Status-Signalisierung des Telefonie-Status von virtuellen Teilnehmern zwischen den lokalen ISDN-Telefonanlagen über Intranet/Internet erfolgt. Die Verfügbarmachung von Information über und die Anzeige von dem Telefonie-Status von Teilnehmern für andere Teilnehmer ist die Grundlage von wesentlichen Leistungsmerkmalen von Telefonanlagen. Derartige Information über das Festnetz nicht ohne Aufwand - mittels QSIG oder z.B. als Nutzdaten einer gebührenpflichtigen Verbindung - übertragbar. Erfindungsgemäß wird das Intranet/Internet als Medium der Signalisierungsdatenübertragung genutzt parallel zur bei Bedarf schaltbaren Telefonieverbindung.

Teilnehmer eines öffentlichen Mobilfunknetzes oder eines DECT-Mobilfunknetzes werden vorteilhaft als besondere Teilnehmer mit besonderen Leistungsmerkmalen behandelt. Beispielsweise können voreingestellte Zuordnungen Teilnehmerrufnummer-Mobilfunkrufnummer von der zweiten auf die erste Telefonanlage automatisch übertragen werden bei der Einrichtung eines virtuellen Teilnehmers. DECT kann wie in jedem gängigen Telekommunikations-system gemäß des definierten Leistungsumfangs eingesetzt werden. GSM-Endgeräte sind ins Telekommunikations-system über die seitens des jeweiligen Service Providers einbindbar (z.B. Rufumleitung). Weiterhin ist seitens des GSM-Endgerätes eine spezielle Rufnummer des Telekommunikations-Systems anwählbar, über die unter Passwortschutz eine Verwaltungsfunktion oder Leistungsmerkmalfunktion des Telekommunikations-Systems durchführbar ist. So kann z.B. der Vertriebsmitarbeiter, der sich außer Haus befindet, sein Teilnehmerprofil netzweit ändern. Eine mögliche Anwendung wäre die Einrichtung der Rufumleitung seines drahtgebundenen Endgerätes auf sein mobiles Endgerät oder einen Sprachspeicher, und dies netzübergreifend.

Vorteilhaft umfasst das Erfassen eine Signalisierung über eine Bluetooth-Verbindung zwischen einem Terminal und einem PC. So kann das Erfassen in einer Client-Server Konfiguration besonders elegant erfolgen, indem ein berechtigter Nutzer seinen Client als Vermittlungsplatz einrichtet.

In einem erfindungsgemäßen Verfahren zum Aufbau einer Kommunikationsverbindung durch ausgehenden Ruf zwischen Teilnehmern in unabhängigen über ein Festnetz verbundenen ISDN-Telefonanlagen mit Leistungsmerkmalen, mit den Verfahrensschritten
Bestimmen einer ersten ISDN-Telefonanlage mit einem ersten Teilnehmer mit einer ersten CTI Application;
Auswählen eines zweiten Teilnehmers einer zweiten ISDN-Telefonanlage;
Erfassen des zweiten Teilnehmers in der ersten CTI Application als virtueller Teilnehmer der ersten ISDN-Telefonanlage mit einem Administrationswerkzeug;
Anfordern der Kommunikationsverbindung durch Anrufen durch den ersten Teilnehmer unter Benutzung von Leistungsmerkmalen mittels der ersten CTI Application; und
Aufbau der Kommunikationsverbindung durch Annahme des Anrufs durch den zweiten Teilnehmer unter Benutzung von Leistungsmerkmalen bietet die Vernetzung eine vorteilhafte Möglichkeit, den zweiten Teilnehmer der zweiten ISDN-Telefonanlage von einem Terminal der ersten Telefonanlage aus leistungsmerkmalbezogen für ausgehende Rufe wie einen Teilnehmer der ersten Telefonanlage zu behandeln.

Dann weist der Verfahrensschritt Anfordern vorteilhaft den Unterschritt Auswahl einer zu wählenden Rufnummer durch Anklicken eines Feldes in einer Bildschirmmaske der ersten CTI Application auf. Und der Verfahrensschritt Anfordern weist vorteilhaft den Unterschritt Übertragung einer zu wählenden Rufnummer von der ersten CTI Application zu einer Telekommunikationsanlage per CSTA auf. Weiter weist der Verfahrensschritt Anfordern den Unterschritt Übermitteln von Signalisierungsdaten von der ersten CTI Application zu einer zweiten CTI Application des gerufenen Teilnehmers über Intranet/Internet auf.

In einem erfindungsgemäßen Verfahren zum Aufbau einer Kommunikationsverbindung durch eingehenden Ruf zwischen Teilnehmern in unabhängigen über ein Festnetz verbundenen ISDN-Telefonanlagen mit Leistungsmerkmalen, mit den Verfahrensschritten
Bestimmen einer ersten ISDN-Telefonanlage mit einem ersten Teilnehmer mit einer ersten CTI Application;
Auswählen eines zweiten Teilnehmers einer zweiten ISDN-Telefonanlage;
Erfassen des zweiten Teilnehmers in der ersten CTI Application als virtueller Teilnehmer der ersten ISDN-Telefonanlage mit einem Administrationswerkzeug;
Anfordern der Kommunikationsverbindung durch einen eingehenden Anruf des zweiten Teilnehmers durch einen externen Teilnehmer; Anzeigen des eingehenden Anruf für den zweiten Teilnehmer dem ersten Teilnehmer unter Benutzung von Leistungsmerkmalen mittels der ersten CTI Application; und
Aufbau der Kommunikationsverbindung durch Annahme des Anrufs durch den ersten Teilnehmer unter Benutzung von Leistungsmerkmalen bietet die Vernetzung eine vorteilhafte Möglichkeit, den zweiten Teilnehmer der zweiten ISDN-Telefonanlage von einem Terminal der ersten Telefonanlage aus leistungsmerkmalbezogen für eingehende Rufe wie einen Teilnehmer der ersten Telefonanlage zu behandeln.

Mit einem Kommunikationssystem gemäß der Erfindung mit unabhängigen über ein Festnetz verbundenen ISDN-Telefonanlagen mit Leistungsmerkmalen, wobei eine erste ISDN-Telefonanlage eine CTI Application mit einer ersten Teilnehmerliste aufweist, die der ersten Teilnehmerliste ausgewählte Teilnehmer einer zweiten ISDN-Telefonanlage als virtuelle Teilnehmer hinzufügt derart, dass die ausgewählten Teilnehmer in Bezug auf die Leistungsmerkmale als Teilnehmer des ersten ISDN-Telefonanlage behandelt werden, können die unabhängigen ISDN-Telefonanlagen mit teilnehmerbezogenen Leistungsmerkmalen mit geringem Aufwand ohne Verwendung von QSIG vernetzt werden.

Weitere vorteilhafte Ausführungsformen ergeben sich aus den weiteren Unteransprüchen und aus der nachfolgenden Beschreibung eines bevorzugten Ausführungsbeispiels, das anhand der Abbildungen näher erläutert wird. Hierbei zeigen:
FIG. 1 eine schematische Darstellung eines Telekommunikationssystems gemäß der Erfindung;
FIG. 2 ein Ablaufdiagramm eines Verfahrens zum Vernetzen von unabhängigen über ein Festnetz verbundenen ISDN-Telefonanlagen gemäß der Erfindung;
FIG. 3 ein Ablaufdiagramm eines Verfahrens zum Aufbau einer Kommunikationsverbindung durch ausgehenden Ruf gemäß der Erfindung;
FIG. 4 ein Ablaufdiagramm eines Verfahrens zum Aufbau einer Kommunikationsverbindung durch eingehenden Ruf gemäß der Erfindung; und
FIG. 5 eine schematische Darstellung eines Telekommunikationssystems nach dem Stand der Technik.

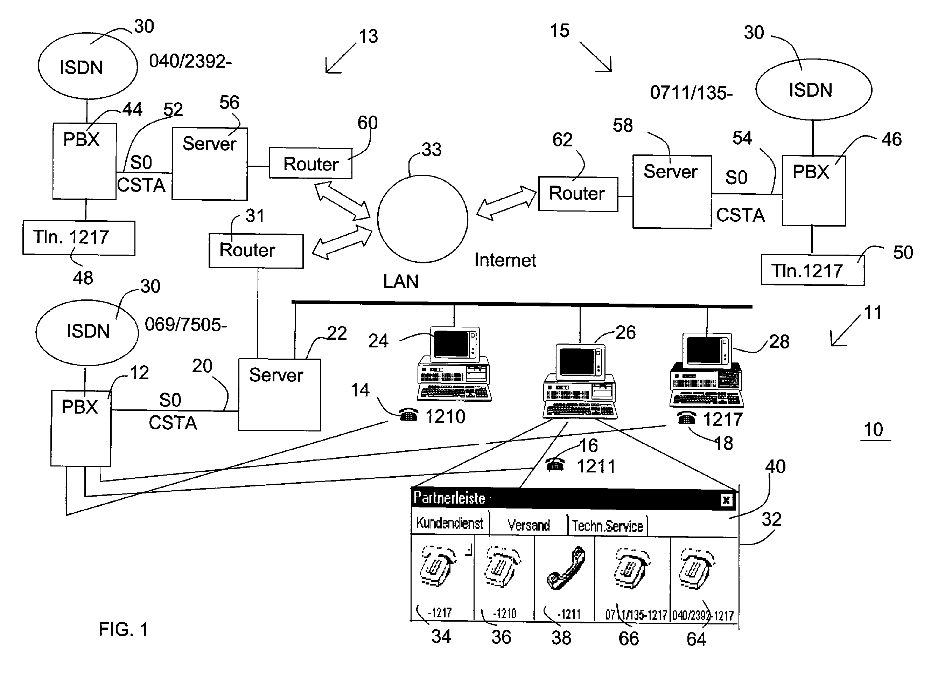

FIG. 1 zeigt in einer schematischen Darstellung ein privates Netzwerk 10 gemäß der Erfindung aus drei kleinen oder mittleren Telekommunikationssystemen 11, 13, 15. Das Telekommunikationssystem 11 gemäß der Erfindung umfasst ein Telefonnetzwerk mit zentraler Telefonanlage PBX (Private Branch Exchange) 12 und damit verbundene Terminals 14, 16, 18 einerseits, welches über eine CSTA-Verbindung 20 mit einem Computernetzwerk mit CTI-Server 22 und über LAN angebundenen Clients 24, 26, 28 andererseits verbunden ist. Dabei sind paarweise (14, 24; 16, 26; 18, 28) bestimmte Terminals und Clients einander zugeordnet. Die Telefonanlage 12 ist mit einem öffentlichen ISDN Festnetz 30 verbunden. der Telefonanlage 12 ist die Festnetz-Anschlussnummer 7505 im Ortsnetz 69 zugeordnet und den Terminals sind Nebenstellen-Anschlussnummern 1210, 1211 und 1217 zugeordnet. Der CTI-Server hat über einen Router 31 eine Verbindung zum Internet bzw. Intranet 33.

Die Telekommunikationssysteme 13 und 15 sind in diesem Beispiel ebenfalls jeweils mit zentraler Telefonanlage PBX 44 bzw. 46 und damit verbundenem Terminal 48 bzw. 50 einerseits, welches über eine CSTA-Verbindung 52 bzw. 54 mit einem CTI-Server 56 bzw. 58 verbunden ist. Über LAN angebundene Clients sind nicht dargestellt. Die Telekommunikationssysteme 13 und 15 haben jeweils über einen Router 60 bzw. 62 eine Verbindung zum Internet bzw. Intranet 33. Die Telefonanlagen 44 und 46 sind mit den öffentlichen ISDN Festnetz 30 verbunden. Sie haben für (nicht dargestellte) Terminals einen ähnlichen Nummernvorrat vergeben wie Telefonanlage 12. Exemplarisch sind hier den Telefonanlagen 44 und 46 unterschiedliche Festnetz-Anschlussnummern 2392 bzw. 135 in verschiedenen Ortsnetzen 40 bzw. 711 zugeordnet (dargestellt mit vorangestellter 0 für das nationale Fernnetz) und den für die Beschreibung der Vernetzung ausgewählten Terminals sind beiden die Nebenstellen-Anschlussnummer 1217 zugeordnet, welche in der Telefonanlage 11 ebenfalls vergeben ist. Bei der Durchführung der erfindungsgemäßen Vernetzung der Telekommunikationssysteme 13 und 15 werden deren Teilnehmer 48 bzw. 50 mit den Rufnummern 040/2392 1217 bzw. 0711/135 1217 als virtuelle Teilnehmer des Telekommunikationssystems 11 erfasst.

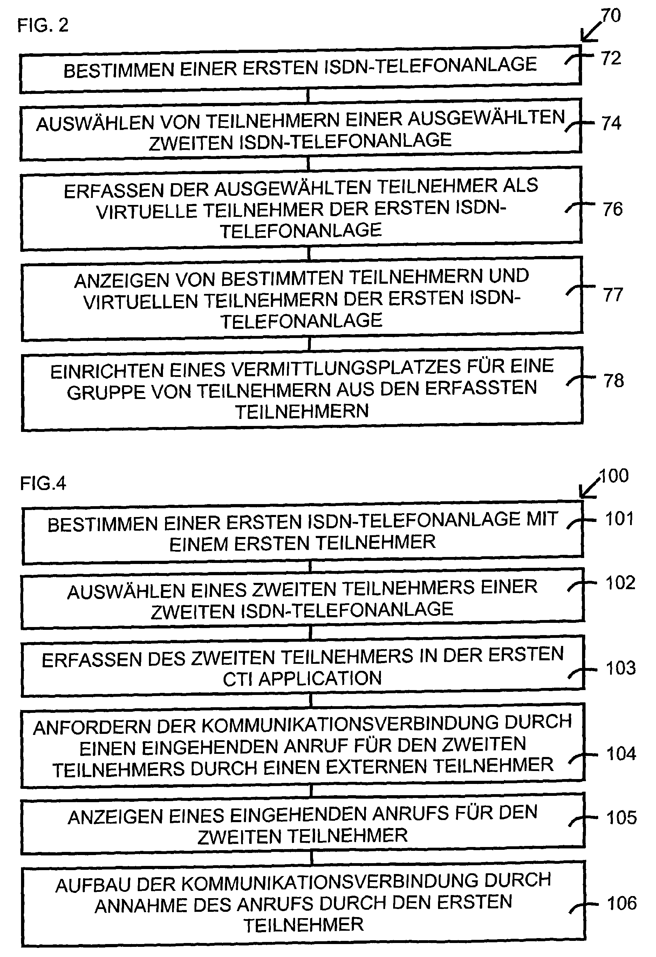

FIG. 2 zeigt in Ablaufdiagramm 70 ein Verfahren, mit gemäß dem die Telefonanlage 12 jeweils mit den mit Telefonanlage 12 über ein Festnetz verbundenen Telefonanlagen 44 und 46 gemäß der Erfindung vernetzt werden kann. Dies wird exemplarisch mit Bezug auf FIG. 1 für Telefonanlage 44 beschrieben. Zunächst wird in Verfahrensschritt 72 die Telefonanlage 12 als ersten ISDN-Telefonanlage mit einer CTI Application, beispielsweise auf Client 26, bestimmt. Dann werden in Verfahrensschritt 74 Teilnehmer, hier Teilnehmer 48, der ausgewählten zweiten ISDN-Telefonanlage 44 ausgewählt. Anschließend werden in Verfahrensschritt 76 die ausgewählten Teilnehmer, hier Teilnehmer 48, in der CTI Application als virtuelle Teilnehmer der Telefonanlage 44 erfasst, derart, dass die ausgewählten Teilnehmer in Bezug auf ihre Leistungsmerkmale als Teilnehmer des ersten ISDN-Telefonanlage behandelt werden.

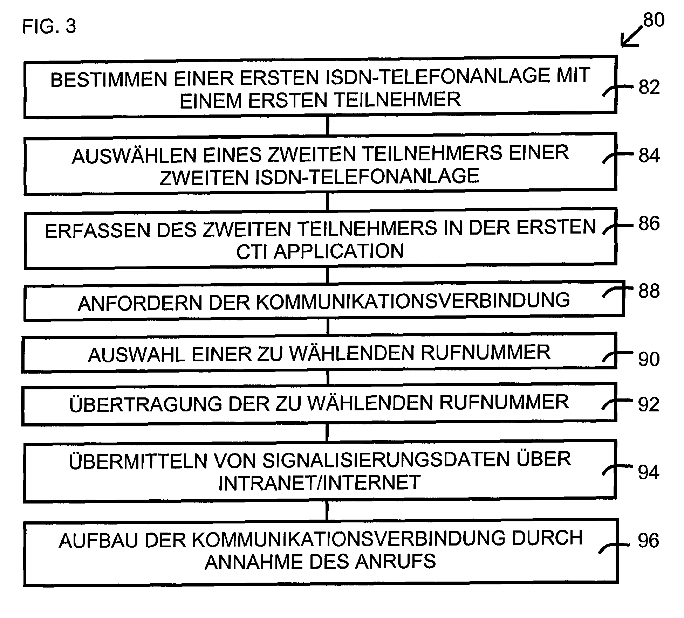

Das Erfassen mit von ausgewählten Teilnehmern mit einer Zuordnung von Leistungsmerkmalen ist eine Voraussetzung dafür, dass danach Teilnehmern der Telefonanlage 12 die Leistungsmerkmale in bezug auf die virtuellen Teilnehmer für Telefonieanwendungen zur Verfügung stehen. Solche Anwendungen werden unten in Verbindung mit FIG. 3 und FIG. 4 beschrieben.

Hier sei hervorgehoben, dass dieses Erfassen eine Signalisierung umfasst, die sowohl über das Festnetz 30 als auch über das Internet 33 erfolgen kann. Lokal kann das Erfassen eine Signalisierung über eine Bluetooth-Verbindung zwischen einem Terminal 16 und einem PC, Client 26, erfolgen. Das Erfassen erfolgt vorteilhaft mit einer Erfassungs-Signalisierung, welche eine gemeinsame Eigenschaft der ersten und der zweiten ISDN-Telefonanlage ist. Die Erfassungs-Signalisierung ist für den Austausch von statischen Daten zur Einrichtung von virtuellen Teilnehmern erforderlich und ist von einer Signalisierung von den sich dynamisch ändernden Daten der Telefoniezustände für Telefonieanwendungen zu unterscheiden.

Das Erfassen erfolgt mit einer Erfassungssoftware als Administrationswerkzeug. Das Auswählen von Teilnehmern kann alle Teilnehmer der zweiten lokalen ISDN-Telefonanlage 44 umfassen. Falls die erste und die zweite ISDN-Telefonanlage gemeinsame Leistungsmerkmale aufweisen, können die gesamten gemeinsamen Leistungsmerkmale genutzt werden. Gegebenenfalls können in beiden bzw. allen beteiligten Anlagen jeweils Teilnehmer der anderen Anlage oder Anlagen als virtuelle Teilnehmer erfasst werden und allen stehen ähnliche oder dieselben Leistungsmerkmale zur Verfügung.

Von den Leistungsmerkmalen der Telefonanlage wird hier insbesondere Gebrauch gemacht, in dem die Telefoniezustände der Teilnehmer, einschließlich der virtuellen Teilnehmer, derselben Gruppe bzw. deren Terminals einem oder mehreren Teilnehmern mitgeteilt werden, und zwar besonders komfortabel über CTI auf den jeweils zugeordneten Computerbildschirm. Exemplarisch ausgewählt ist für den dem Terminal 16 zugeordneten Client 26 ein Bildschirmfenster "Partnerleiste" 32 dargestellt, in dem die Telefoniezustände der Teilnehmer derselben Gruppe bzw. deren Terminals in Feldern 34, 36, 38, 66, 68 dargestellt sind. Hier gehören zur Gruppe die Terminals 24, 26, und 28 des Telekommunikationssystems 11 sowie die Teilnehmer 48 und 50 der Telekommunikationssysteme 13 bzw. 15 als virtuelle Teilnehmer des Telekommunikationssystems 11. Diese Gruppe von Teilnehmern ist in der Reihenfolge 18, 14, 16, 50, 48 in Feldern 34, 36, 38, 66, 68 dargestellt sind. Im unteren Bereich der Felder 34, 36, 38, 66, 68 der Partnerleiste 32 ist jeweils die Rufnummer der Teilnehmer, bei Teilnehmern innerhalb der Telefonanlage 11 nur die interne Rufnummer, dargestellt, die virtuellen Teilnehmer also mit den Rufnummern 040/2392 1217 bzw. 0711/135 1217. Dabei werden auch die Telefoniezustände der Terminals angezeigt. Die Terminals 28, 24, 50 und 48 sind im verbindungslosen Zustand, dargestellt durch ein Telefon in Feldern 36, 38, 66, 68, während der Hörer des Terminals 26 abgenommen ist, dargestellt durch einen Hörer im Feld 38. Weiterhin sind häufig nachgefragte Weiterverbindungen über eine Vermittlungsleiste 40 komfortabel erreichbar. Ein bei Terminal 18 eingehender Anruf wird im zugeordneten Feld 34 durch das Symbol 42 angezeigt. Ein Bearbeiter am Arbeitsplatz mit Terminal 16 und Client 26 kann nun bequem über den Client 26 die Telefonanlage steuern, beispielsweise den bei Terminal 18 ankommenden Anruf annehmen.

Im Detail kann ein Verbindungsablauf in Hinblick auf FIG. 1 folgendermaßen erfolgen. Wählt z.B. der Teilnehmer 16 mit Rufnummer 069/7505-1211 durch Anklicken des Feldes 64 auf der Partnerleiste 32 die Nummer 040/2392-1217, so wird die Information weitergeleitet zum Server 22. Hier wird die zu wählende Nummer per CSTA über die Verbindung 20 an die Telekommunikationsanlage 12 zur Herstellung einer Telefonie-Verbindung über das Festnetz 30 übertragen. Im Server 22 werden weiterhin die Signalisierungsparameter wie Remote-URL, Informationen für die Partnerleiste des gewählten Remote-Apparates, Anrufart etc. selektiert und dem gerufenen Server 56 des zur Rufnummer 040/2392- gehörenden Kommunikationssystems 13 über das Internet 33 mittels URL zugeleitet. Der dortige Server 56 erneuert jetzt die Partnerleisten der Remote-Workstations. Den Remote-Partnern werden in den Partnerleisten nun Informationen über den Telefoniezustand des Partners mit Terminal 16 dargestellt, die nicht über das Festnetz signalisiert worden sind. Geht der Verbindungsaufbau in den Zustand "Gespräch" durch Betätigen der Aktion "Herstellen der Verbindung" am Remote-Telekommunikations-Endgerät, das kann z.B. Abheben des Handapparates sein, so wird dies von der Telekommunikationsanlage 44 über das Festnetz der Telekommunikationsanlage 12 signalisiert und wieder per CSTA über Verbindung 20 dem Server 22 mitgeteilt. Der aktualisiert Server 22 dann die Partnerleisten der Workstations bzw. Clients der eigenen Anlage und über das Internet alle anderen Server im Netzverbund. So werden also auch die an die Telekommunikationsanlage 46 angeschlossenen Teilnehmer der Partnergruppe, stellvertretend der Teilnehmer mit Terminal 50, über den Telefoniezustand des Teilnehmers 16 informiert und damit über dessen aktuelle Erreichbarkeit per Telefon.

In einer vorteilhaften Ausführungsform der Erfindung erfolgt also in einem weiteren Verfahrensschritt 77 das Anzeigen von bestimmten Teilnehmern 18, 14, 16 und virtuellen Teilnehmern 50, 48 der ersten ISDN-Telefonanlage simultan in einer Bildschirmmaske, Bildschirmfenster "Partnerleiste" 32, der CTI Application in den Feldern 34, 36, 38, 66, 68.

In einer weiteren vorteilhaften Ausführungsform der Erfindung erfolgt nach dem Erfassen der virtuellen Teilnehmer eine Signalisierung von deren Telefoniestatus zwischen den lokalen ISDN-Telefonanlagen über Intranet/Internet. Nachdem mit dem Erfassen die Vernetzung der Anlagen erfolgt ist werden diese nun vernetzt betrieben.

Teilnehmer eines öffentlichen Mobilfunknetzes und Teilnehmer eines DECT-Mobilfunknetzes können als besondere Teilnehmer mit besonderen Leistungsmerkmalen behandelt werden.

FIG. 3 zeigt in Ablaufdiagramm 80 ein Verfahren zum Aufbau einer Kommunikationsverbindung zwischen Teilnehmern in unabhängigen über ein Festnetz verbundenen ISDN-Telefonanlagen mit Leistungsmerkmalen. Im Verfahrensschritt 82 wird eine erste ISDN-Telefonanlage mit einem ersten Teilnehmer mit einer ersten CTI Application bestimmt. Im Verfahrensschritt 84 wird ein zweiter Teilnehmer einer zweiten ISDN-Telefonanlage ausgewählt. Im Verfahrensschritt 86 wird der zweite Teilnehmer in der ersten CTI Application als virtueller Teilnehmer der ersten ISDN-Telefonanlage erfasst. Der erste Teilnehmer fordert im Verfahrensschritt 88 die Kommunikationsverbindung durch Anrufen unter Benutzung von Leistungsmerkmalen mittels der ersten CTI Application an. Schließlich erfolgt im Verfahrensschritt 96 der Aufbau der Kommunikationsverbindung durch Annahme des Anrufs durch den zweiten Teilnehmer unter Benutzung von Leistungsmerkmalen.

In bevorzugten Ausführungsformen dieses erfindungsgemäßen Verfahrens weist der Verfahrensschritt Anfordern 88 den Unterschritt 90 Auswahl einer zu wählenden Rufnummer durch Anklicken eines Feldes in einer Bildschirmmaske der ersten CTI Application, und/ oder den Unterschritt 92 Übertragung einer zu wählenden Rufnummer von der ersten CTI Application zu einer Telekommunikationsanlage per CSTA, und/ oder den Unterschritt 94 Übermitteln von Signalisierungsdaten von der ersten CTI Application zu einer zweiten CTI Application des gerufenen Teilnehmers über Intranet/Internet auf.

FIG. 4 zeigt in Ablaufdiagramm 100 ein erfindungsgemäßes Verfahren zum Aufbau einer Kommunikationsverbindung durch eingehenden Ruf zwischen Teilnehmern in unabhängigen über ein Festnetz verbundenen ISDN-Telefonanlagen mit Leistungsmerkmalen. Im Verfahrensschritt 101 wird eine erste ISDN-Telefonanlage mit einem ersten Teilnehmer mit einer ersten CTI Application bestimmt. Im Verfahrensschritt 102 wird ein zweiter Teilnehmer einer zweiten ISDN-Telefonanlage ausgewählt. Anschließend wird im Verfahrensschritt 103 der zweite Teilnehmer in der ersten CTI Application als virtueller Teilnehmer der ersten ISDN-Telefonanlage mit einem Administrationswerkzeug erfasst. Im Verfahrensschritt 104 wird eine Kommunikationsverbindung durch einen eingehenden Anruf zum zweiten Teilnehmer durch einen externen Teilnehmer angefordert. Der eingehende Anruf für den zweiten Teilnehmer wird im Verfahrensschritt 105 dem ersten Teilnehmer unter Benutzung von Leistungsmerkmalen mittels der ersten CTI Application angezeigt. Schließlich erfolgt im Verfahrensschritt 106 der Aufbau der Kommunikationsverbindung durch Annahme des Anrufs durch den ersten Teilnehmer unter Benutzung von Leistungsmerkmalen.

Durch Nutzen der Partnerleiste, in der alle lokalen Nebenstellen vom Client aus einstellbar sind, wird der Kommunikationsablauf wesentlich klarer strukturiert. Ein Ausfall des LANs oder des CTI-Servers führt nicht zum Kommunikationsstillstand, sondern lediglich zur minderen Verfügbarkeit der zusätzlichen CTI Informationen.

Die auf dem CTI-Server ablaufende CTI-Server Software hat verschiedene Komponenten, darunter eine Client-Verwaltungs-Software die die Zuordnung von Terminals und Clients verwaltet und Clients einrichtet. Weiterhin bietet eine Telefoniedienste-Software, welche die Telefoniezustände der Terminals des Telefonsystems abbildet und diese Information an die Clients zur Darstellung weitergibt, auf der Basis der Telefoniezustände Telefoniedienste an, die die Clients anfordern können. Auf eine solche Anforderung erfolgt ein Auftrag vom CTI-Server an die Telefonanlage über die CSTA-Verbindung. Beispiele für solche Aufträge sind das Wählen einer Telefonnummer, das Makeln zwischen bestehenden Verbindungen oder eine Konferenzschaltung.

Ein wesentlicher Vorteil ist, dass in diesem vernetzten System dem Teilnehmer am Terminal 16 der Telefonanlage 12 am Bildschirm des zugehörigen Computers die Telefoniezustände auch derjenigen Terminals 48, 50, die nicht zur Telefonanlage 12 gehören, angezeigt werden, und zwar ohne dass eine Telefonieverbindung zu deren Telefonanlagen 13, 15 über das Festnetz besteht.

Gemäß der Erfindung können mehrere ortsunabhängige, singuläre Systeme 11, 12, 13, die einen Anschluss ans Internet haben, bezüglich ihres Signalaustausches miteinander vernetzt werden. Der Transport der Status-Signalisierung erfolgt über das Internet bzw. Intranet. Die Sprachkommunikation wird weiterhin über das öffentliche Netz (PSTN) geleitet. Die Eigenschaften der Teilnehmer wie Rufnummern, sowie ihre Funktionen in der Organisation (Versand-, Kundendienst-Anzeige, Marketing, Entwicklung, Verkauf...) werden lokal, entsprechend der dortigen Gegebenheiten, dem zuständigen Server mitgeteilt. Weiterhin können die Internetadressen (URL, Uniform Resource Locator) der beteiligten Server - deren zugehörigen Anlagen miteinander vernetzt werden sollen - ausgetauscht werden. Damit kann jede beliebige Organisationsstruktur auf diese Client/Server - Struktur abgebildet werden. Somit ist eine leicht anpassbare Repräsentation tagesaktueller Organisationsänderungen möglich (z.B. Sonderschauen, Ausstellungen, Tagungen).

Der Rufnummernhaushalt der beteiligten Telekommunikationsanlagen ist anpassbar an die jeweilige Netzgröße (Zahl und technische Ausführung der beteiligten Anlagen) und an die lokalen Veränderungen; z.B. Hinzufügen und Löschen von Teilnehmern, Nummerund/oder Funktionsänderungen von Nebenstellen (offener Rufnummernplan). Die durchgeführten Veränderungen werden allen Servern 22, 56, 58 im Kommunikationsverbund 10 mitgeteilt.

Durch die gegenseitige Kenntnis der Teilnehmer über deren Status, egal in welcher Anlage (Telekommunikationsanlage, DECT, GSM), lokalisiert und dargestellt durch die anlagenübergreifende Partnerleiste(n) wie 32, ist es jetzt möglich, Leistungsmerkmale wie Rückruf, Pick up, Anruf per Mausklick, Konferenzschaltung, Rückruf, Makeln u.a.m. zu realisieren, ohne eine Anlagenvernetzung mit QSIG vorliegen zu haben.

Die Partnerleiste kann an jedem Client bzgl. der Auswahl der angezeigten Teilnehmer, die in einer Telekommunikationsanlage oder mehreren der vernetzten Telekommunikationsanlagen lokalisiert sind, individuell zusammengestellt werden. Die Informationen des darzustellenden Teilnehmers sind im dazugehörigen Server abgelegt und können von allen Clients zum Einrichten eines Teilnehmer-Feldes der Partnerleiste netzweit abgerufen werden.

Der große Vorteil der Art und Weise des funktionellen Aufbaus und der dynamischen Zusammenstellung der Partnerleiste gestattet es, dass jeder beliebige CTI-Client im Netz als Vermittlungsplatz eingerichtet sein kann. Dort sind dann alle im Netzverbund erreichbaren Teilnehmer, auf einer Partnerleiste gesammelt, optisch vorhanden und deren Kommunikationszustände an dem dementsprechenden Client beobachtbar.

Für eine Werbeaktion werden beispielsweise telefonieseitig an jeder Telekommunikationsanlage Pseudonummern für die Vermittlungsplätze eingerichtet; z.B. 040/2392-1217. Ebenso wird mit den anderen Telekommunikationsanlagen verfahren; 0711/135-1217 und 069/7505-1210. Alle diese Nummern werden einem beliebigen Client im Netz, hier Client 26, zugeordnet, der in allen Servern 22, 56, 58 als der zentrale Vermittlungsplatz gekennzeichnet ist. Ankommende Anrufe auf die Platznummern werden dem jeweiligen Server mitgeteilt, der dann eine Umleitung dieser kommenden Rufe auf den zentralen Vermittlungsplatz mit Terminal 16 durchführt und gleichzeitig auf Client 26 angezeigt. Hier wird eine Abfrage durchgeführt und der Anruf mittels CTI zum gewünschten Teilnehmer weitergeleitet, der sich durch das Gespräch des Anrufers mit der Person am Vermittlungsplatz ergeben hat. Eine Warteschlange bei mehreren ankommenden Anrufen ist für den Vermittlungsplatz eingerichtet.

Bei einem im Netz an einem anderen Ort lokalisierten Teilnehmer kann eine automatische Bekanntgabe erfolgen, dass eine Weitervermittlung mit höheren Gebühren erfolgt oder es erfolgt ein Least Cost Routing zur Verbindung mit optimalem Tarif.

In einem anderen Beispiel kann etwa in einem Call-Center jeder Teilnehmer als Vermittlungsplatz dynamisch eingerichtet werden. Dazu erfolgt eine dementsprechende Aktivierung der Partnerleiste. Ein Platz-Info-Feld zeigt einen ankommenden Anruf bei allen Teilnehmern an. Ein Teilnehmer nimmt den ankommenden Anruf an (pick up). Das Platz-Info-Feld wird zur Information der anderen Teilnehmer aktualisiert mit derjenigen Teilnehmer-Nummer, die den kommenden Anruf bearbeitet.

Die Administration des vernetzten Telekommunikations-systems erfolgt über eine Administrationsschnittstelle. Hierzu werden die vorhandenen Verwaltungsprogramme auf Clients und den Servern über die CSTA und LAN-Schnittstellen installiert. Dann ist auch eine Verwaltung von jedem Client im Verbund möglich.

Mit der Erfindung kann ohne die Einführung eines speziellen Protokolls, wie das im Telekommunikations-Verbund per QSIG vonnöten ist, eine Vernetzung von kleinen Telekommunikationssystemen mit sehr geringem Aufwand unter Ausnutzung von Standard-Komponenten erreicht werden, wenn ein Intenet/Intranet-Anschluss vorhanden ist. Die Information über den Aktionszustand des Anlagenverbundes ist an jeder Workstation durch die Partnerleiste einsehbar. Die Verbindungsaktionen für die Anrufarten sind per Mausklick auf der Partnerleiste durchführbar. Die vorhandenen vermittlungstechnischen Leistungsmerkmale und CTI-Funktionen, die weitgehend unabhängig von einer Hersteller-Ausprägung der zu einem Telekommunikations-Netz zusammengefügten Anlagen sind, kommen gemäß dieser Erfindung besonders vorteilhaft zur Geltung. Durch die Realisierung aller Netzfunktionen auf Servern und das Nutzen genormter Schnittstellen wie CSTA und LAN (Internet / Intranet), ist es möglich, heterogene Anlagen (z.B. verschiedener Hersteller und/oder Anlagen vom gleichen Hersteller unterschiedlichen Typs) zu vernetzen.

Die Ausführung der Erfindung ist nicht auf das beschriebene Beispiel und die oben hervorgehobenen Aspekte beschränkt, sondern im Rahmen der Ansprüche ebenso in einer Vielzahl von Abhandlungen möglich, die im Rahmen fachgemäßen Handelns liegen.

## Patentansprüche

1. Verfahren zum Vernetzen von unabhängigen über ein Festnetz (30) verbundenen ISDN-Telefonanlagen (12, 44, 46) mit teilnehmerbezogenen Leistungsmerkmalen, mit den Verfahrensschritten
Bestimmen (72) einer ersten ISDN-Telefonanlage (12) mit einer CTI Application;
Auswählen (74) von Teilnehmern (48) einer ausgewählten zweiten ISDN-Telefonanlage (44); und
Erfassen (76) der ausgewählten Teilnehmer in der CTI Application als virtuelle Teilnehmer der ersten ISDN-Telefonanlage derart, dass die ausgewählten Teilnehmer in Bezug auf ihre Leistungsmerkmale als Teilnehmer des ersten ISDN-Telefonanlage behandelt werden.

2. Verfahren nach Anspruch 1, wobei das Erfassen eine Signalisierung über das Festnetz (30) umfasst.

3. Verfahren nach Anspruch 1, wobei das Erfassen eine Signalisierung über das Internet/Intranet (33) umfasst.

4. Verfahren nach einem der Ansprüche 1 bis 3, wobei das Erfassen mit einer Erfassungs-Signalisierung erfolgt, welche eine gemeinsame Eigenschaft der ersten (12) und der zweiten (44) ISDN-Telefonanlage ist.

5. Verfahren nach einem der Ansprüche 1 bis 4, wobei das Erfassen mit einem Administrationswerkzeug erfolgt.

6. Verfahren nach einem der Ansprüche 1 bis 5, wobei das Auswählen von Teilnehmern alle Teilnehmer der zweiten lokalen ISDN-Telefonanlage (44) umfasst.

7. Verfahren nach einem der Ansprüche 1 bis 6, wobei die erste (12) und die zweite (44) ISDN-Telefonanlage gemeinsame Leistungsmerkmale aufweisen.

8. Verfahren nach einem der Ansprüche 1 bis 7, mit dem weiteren Verfahrensschritt Anzeigen (77) von bestimmten Teilnehmern und virtuellen Teilnehmern der ersten ISDN-Telefonanlage (12) simultan in einer Bildschirmmaske (32) der CTI Application.

9. Verfahren nach einem der Ansprüche 1 bis 8, mit dem weiteren Verfahrensschritt Einrichten (78) eines Vermittlungsplatzes für eine Gruppe von Teilnehmern aus den erfassten Teilnehmern.

10. Verfahren nach einem der Ansprüche 1 bis 9, wobei die CTI Application in einer Client-Server Konfiguration (24, 26, 28; 22) realisiert ist.

11. Verfahren nach Anspruch 10, mit dem weiteren Verfahrensschritt Einrichten eines bestimmten Clients (26) als Vermittlungsplatz für eine Gruppe von Teilnehmern aus den erfassten Teilnehmern.

12. Verfahren nach einem der Ansprüche 1 bis 11, wobei eine Status-Signalisierung zwischen den lokalen ISDN-Telefonanlagen (12, 44, 46) über Intranet/Internet (33) erfolgt.

13. Verfahren nach einem der Ansprüche 1 bis 12, wobei Teilnehmer eines öffentlichen Mobilfunknetzes als besondere Teilnehmer mit besonderen Leistungsmerkmalen behandelt werden.

14. Verfahren nach einem der Ansprüche 1 bis 13, wobei Teilnehmer eines DECT-Mobilfunknetzes als besondere Teilnehmer mit besonderen Leistungsmerkmalen behandelt werden.

15. Verfahren nach einem der Ansprüche 1 bis 14, wobei das Erfassen eine Signalisierung über eine Bluetooth-Verbindung zwischen einem Terminal und einem PC umfasst.

16. Verfahren zum Aufbau einer Kommunikationsverbindung durch ausgehenden Ruf zwischen Teilnehmern in unabhängigen über ein Festnetz (30) verbundenen ISDN-Telefonanlagen (12, 44) mit Leistungsmerkmalen, mit den Verfahrensschritten
Bestimmen (82) einer ersten ISDN-Telefonanlage (12) mit einem ersten Teilnehmer mit einer ersten CTI Application;
Auswählen (84) eines zweiten Teilnehmers einer zweiten ISDN-Telefonanlage (44);
Erfassen (86) des zweiten Teilnehmers in der ersten CTI Application als virtueller Teilnehmer der ersten ISDN-Telefonanlage (12); Anfordern (88) der Kommunikationsverbindung durch Anrufen durch den ersten Teilnehmer unter Benutzung von Leistungsmerkmalen mittels der ersten CTI Application; und
Aufbau (96) der Kommunikationsverbindung durch Annahme des Anrufs durch den zweiten Teilnehmer unter Benutzung von Leistungsmerkmalen.

17. Verfahren nach Anspruch 16, wobei der Verfahrensschritt Anfordern (88) den Unterschritt Auswahl (90) einer zu wählenden Rufnummer durch Anklicken eines Feldes in einer Bildschirmmaske der ersten CTI Application aufweist.

18. Verfahren nach Anspruch 16 oder 17, wobei der Verfahrensschritt Anfordern (88) den Unterschritt Übertragung (92) einer zu wählenden Rufnummer von der ersten CTI Application zu einer Telekommunikationsanlage per CSTA aufweist.

19. Verfahren nach einem der Ansprüche 16 bis 18, wobei der Verfahrensschritt Anfordern (88) den Unterschritt Übermitteln (94) von Signalisierungsdaten von der ersten CTI Application zu einer zweiten CTI Application des gerufenen Teilnehmers über Intranet/Internet aufweist.

20. Verfahren zum Aufbau einer Kommunikationsverbindung durch eingehenden Ruf zwischen Teilnehmern in unabhängigen über ein Festnetz (30) verbundenen ISDN-Telefonanlagen (12, 44) mit Leistungsmerkmalen, mit den Verfahrensschritten
Bestimmen (101) einer ersten ISDN-Telefonanlage (12) mit einem ersten Teilnehmer mit einer ersten CTI Application;
Auswählen (102) eines zweiten Teilnehmers einer zweiten ISDN-Telefonanlage (44);
Erfassen (103) des zweiten Teilnehmers in der ersten CTI Application als virtueller Teilnehmer der ersten ISDN-Telefonanlage; Anfordern (104) der Kommunikationsverbindung durch einen eingehenden Anruf des zweiten Teilnehmers durch einen externen Teilnehmer; Anzeigen (105) eines eingehenden Anrufs für den zweiten Teilnehmer dem ersten Teilnehmer unter Benutzung von Leistungsmerkmalen mittels der ersten CTI Application; und
Aufbau (106) der Kommunikationsverbindung durch Annahme des Anrufs durch den ersten Teilnehmer unter Benutzung von Leistungsmerkmalen.

21. Kommunikationssystem (10) mit unabhängigen über ein Festnetz (30) verbundenen ISDN-Telefonanlagen (12, 44, 46) mit Leistungsmerkmalen, wobei eine erste ISDN-Telefonanlage (12) eine CTI Application mit einer ersten Teilnehmerliste aufweist, die der ersten Teilnehmerliste ausgewählte Teilnehmer einer zweiten ISDN-Telefonanlage (44) als virtuelle Teilnehmer hinzufügt derart, dass die ausgewählten Teilnehmer in Bezug auf die Leistungsmerkmale als Teilnehmer des ersten ISDN-Telefonanlage behandelt werden.
